# EUROPEAN PATENT APPLICATION

(11) **EP 4 789 916 A1**
(43) Date of publication of application: **12.08.2026**
(21) Application number: 25156261.7
(22) Date of filing: 06.02.2025
(51) Int. Cl.: B60P 1/52

(54) **LOAD HANDLING SYSTEM**

(71) Applicant: Modul-System HH AB, 431 49 Mölndal (SE)
(72) Inventor: CARLSSON, Anders, 431 49 Mölndal (SE)
(74) Representative: AWA Sweden AB

(57) **Abstract**

The disclosure relates to a system and method for handling a load in a cargo space of a road vehicle. The system comprises: at least one load handling module configured to be arranged in said cargo space of said road vehicle; an actuator arrangement operated at a voltage V and operatively connected to the at least one load handling module; and a detection and processing arrangement communicatively connected to the actuator arrangement. The at least one load handling module comprises: a base portion configured to rest on a surface of the road vehicle and extending in a plane configured to be parallel with said surface; and one or more load bearing elements, each of the one or more load bearing element being movable by means of the actuator arrangement a height h between a first position and a second position in a direction perpendicular to said plane of the base portion. The detection and processing arrangement is configured to: collect data indicative of current and time required by the actuator arrangement for moving the one or more load bearing element from the first position to the second position, and based on said voltage V and said data, determine an energy consumed by said actuator arrangement for moving the one or more load bearing element from the first position to the second position.

## Description

### Field of the disclosure

The disclosure relates to systems for handling loads in cargo spaces of road vehicles. The disclosure also relates to methods for operating such systems.

### Technical Background

When performing operations with a service vehicle, such as delivery of goods, maintenance, or construction, loads which are kept in the cargo space of the vehicle have to be handled. Such loads may, e.g., be the goods which are to be delivered, equipment, such as tools or machinery, or construction material. For different reasons which vary depending on the service being provided, it is important to keep track of the loads. For example, it is important to be able to verify that the right goods have been delivered, that no goods have been stolen during delivery, and that all equipment are securely arranged in the cargo space upon departure of the service vehicle.

### Summary of the disclosure

It is an object of the present disclosure to alleviate at least some of the aforementioned issues by providing a system for handling loads in a cargo space of a road vehicle. This and other objects which will be evident from the following description is achieved by a road vehicle having the features defined in claim 1.

According to a first aspect of the present disclosure, a system for handling a load in a cargo space of a road vehicle is provided, the system comprising: at least one load handling module configured to be arranged in said cargo space of said road vehicle; an actuator arrangement operated at a voltage V and operatively connected to the at least one load handling module; and a detection and processing arrangement communicatively connected to the actuator arrangement; wherein the at least one load handling module comprises: a base portion configured to rest on a surface of the road vehicle and extending in a plane configured to be parallel with said surface; and one or more load bearing elements, each of the one or more load bearing element being movable by means of the actuator arrangement a height h between a first position and a second position in a direction perpendicular to said plane of the base portion; and wherein the detection and processing arrangement is configured to: collect data indicative of current and time required by the actuator arrangement for moving the one or more load bearing element from the first position to the second position, and based on said voltage V and said data, determine an energy consumed by said actuator for moving the one or more load bearing element from the first position to the second position.

Hereby, a system which may infer, or which may collect data in order to infer, characteristics of a load in an efficient and more predictable manner is provided.

Within the context of the present disclosure, the term *"load'* is to be understood as any item, object, or cargo that may be transported in a cargo space of a road vehicle. That is, a load may be a package, produce, equipment, such as a power tool, furniture, etc.

It is to be understood that a road vehicle may be any type of vehicle meant for use on roads, such as an automobile, a service vehicle, a light truck, or a heavy truck. Consequently, a cargo space is to be understood as any space of such vehicle which is designed to carry cargo, such as the box of a heavy truck. A cargo space of a road vehicle may also be referred to as a back space of a road vehicle.

It is to be understood that a detection and processing arrangement may be any arrangement which is configured for detection of physical parameters, rendering of data from such detection, and processing of such data. A detection and processing arrangement may therefore comprise any type of, and any number of, sensor as well as hardware components for conducting data or signal processing or for executing functions stored in a memory. For example, the detection and processing arrangement may comprise a voltage sensor, or a current sensor, or a resistance sensor. Additionally, the detection and processing arrangement may comprise a processing unit comprising a processing circuit. The processing unit of the detection and processing arrangement may, e.g., be a central processing unit of the road vehicle in which the system is configured to be arranged.

A characteristic of a load is for example the presence of a load, or the mass of a load.

The presence of a load may be determined in a variety of ways. That is, whether or not a load is present on a load handling module may be determined in a variety of ways. For example, the detection and processing arrangement may further be configured to compare the determined energy consumed by the actuator with a reference value corresponding to an energy required by the actuator arrangement to move the one or more load bearing element from the first position to the second position in an unloaded state, and, based on the comparison of the determined energy consumed and the reference value, determine a presence of a load on said one or more load bearing element.

In other words, the presence of the load may be determined based on a discrepancy between the energy consumed and the reference value. That is, if the energy consumed exceeds the reference value, that is if the energy consumed is higher than the reference value, e.g. higher than the reference value plus a predetermined error margin, it may be concluded that a load is arranged on the load handling module.

Since the system may determine the presence of a load, the system may, e.g., determine whether or not a load is missing, e.g. due to theft, misplacement of the load, or, in the case of road vehicles used for delivery, a wrong delivery.

An *"unloaded state"* is to be understood as a state of the load bearing element in which the element is not supporting any further weight. That is, an load handling module is a module on which no load is arranged.

A reference value may, e.g., be stored in the detection and processing arrangement, alternatively in a non-transitory storage medium which may be accessed by the detection and processing arrangement.

The detection and processing arrangement may further be configured to: if a load is determined to be present, estimate a mass of the load based on the comparison of the determined energy consumed and the reference value and the height h.

Hereby, a system which is configured to not only keep track of a load in terms of verifying the presence thereof, but also is configured to distinguish between different loads, i.e. whether or not the right load has been returned to the cargo space of the road vehicle, is provided.

Within the context of the present disclosure, it is to be understood that the terms "*mass*" and *"weight"* may be used interchangeable. That is, when referring to a weight sensor, or weight sensing, it is to be understood that such a sensor is configured to collect data pertaining to mass.

It is to be understood that the estimate of a mass, or a weight, of the load is based on the fact that the energy consumed for lifting the load, i.e. the difference between the energy consumed by the actuator arrangement in a loaded and an unloaded state, respectively, may be correlated with the mass, or the weight, of the load. In particular, the mass of a load may be found using an amount of energy E required to lift the load the height h through m=E/gh, where g is the gravitational constant.

A load handling module according to the present disclosure may have any shape or dimension. For example, the module may be rectangular, quadratic, triangular or polygonal.

For example, a load handling module may be rectangular with the dimensions 1x1.5 meters. It is to be understood that a load handling module may be assembled from at least two, or a plurality of, sub-modules. For example, a load handling module may comprise two sub-modules which are connected to each other.

The one or more load bearing elements may be any type of element suitable for supporting a load. The one or more load bearing elements may comprise a tile unit, wherein the tile unit forms a surface configured to support a load, the surface extending in a plane substantially parallel with the plane in which the base portion is extending.

That is, the load handling module may comprise a tile unit which is movable between the first position and the second position. Since the load bearing module may have any shape, it is to be understood that the tile unit may have any shape. That is, the tile unit may be quadratic, rectangular, triangular or polygonal.

The one or more load bearing elements may be arranged along a first plane, and wherein the at least one load handling module may further comprise: a panel unit, the panel unit extending parallel with the one or more load bearing elements and extending on both lateral sides of one beam of the one or more load bearing elements, wherein the panel unit forms a surface intended to face said cargo space of the road vehicle, the surface extending in a second plane; and wherein the one or more load bearing elements may be movable relative the panel unit between the first position and the second position.

That the panel unit is extending parallel with the one or more load bearing elements may e.g. imply that the panel unit is forming an opening that permits traversal of the one or more load bearing elements.

The one or more load bearing elements may comprise at least one beam, the at least one beam may have a longitudinal axis and comprising a load supporting surface extending in the first plane.

That is, the at least one beam may be movable between the first position and the second position.

The first plane and the second plane may be arranged in relation to each other in a variety of ways in the first position and the second position.

In the first position, the first plane may be coinciding with the second plane; and in the second position, the second plane is arranged between the first plane and the plane of extension of the base portion.

Hereby, the mass of a load supported in the first plane may be more accurately measured, since the load is arranged in the first plane the full lifting cycle, i.e. from the first position to the second position.

In the first position, the first plane may be arranged between the second plane and the plane of extension of the base portion; and in the second position, the second plane is arranged between the first plane and the plane of extension of the base portion.

Hereby, the first plane, i.e. the roll or ball transfer units, may be hidden in the first position.

A load handling module may be arranged at any surface of the cargo space of a road vehicle. For example, at least one load handling module may be provided as a floor module configured to be arranged on an inner floor of the road vehicle, wherein the base portion is configured to rest on an inner floor surface.

Any number of floor modules may be arranged on the inner floor surface. For example, a plurality of floor modules may be arranged on the inner floor surface. The modules may be configured such that a set of modules may tesselate the inner floor of the road vehicle.

The at least one load handling module may be provided as a shelf module configured to be arranged in a shelving system of the road vehicle, wherein the base portion may configured to rest on a shelf surface.

It is to be understood that the system may comprise more than one, that is a plurality, of load handling modules. Thus, the system may comprise both at least one floor module and at least one shelf module.

According to the second aspect of the present disclosure, a method for handling a load in a cargo space of a road vehicle is provided, the method comprising: providing a load handling module comprising: a base portion configured to rest on a surface of the road vehicle and extending in a plane configured to be parallel with said surface; and one or more load bearing elements, each of the one or more load bearing element being movable by means of an actuator arrangement a height h between a first position and a second position in a direction perpendicular to said plane of the base portion; moving the one or more load bearing elements from the first position to the second position by the actuator arrangement, the actuator arrangement being operated at a voltage V and operatively connected to the at least one load handling module; and collecting data indicative of current and time required by the actuator arrangement for moving the one or more load bearing element from the first position to the second position by a detection and processing arrangement, the detection and processing arrangement being communicatively connected to the actuator arrangement; and determining an energy consumed by said actuator for moving the one or more load bearing element from the first position to the second position by the detection and processing arrangement.

Any technical effect or benefit discussed in relation to the first aspect of the present disclosure may be applicable to the second aspect.

The method may further comprise: comparing, by the detection and processing arrangement, the determined energy consumed by the actuator arrangement with a reference value corresponding to an energy required by the actuator arrangement to move the one or more load bearing element from the first position to the second position in an unloaded state; and determining, by the detection and processing arrangement, a presence of a load on said one or more load bearing element based on the comparison of the determined energy consumed and the reference value.

The method may further comprise: if a load is determined to be present: estimating a mass of the load based on the comparison of the determined energy consumed and the reference value and the height h by the detection and processing arrangement.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief description of the drawings

The disclosure will by way of example be described in more detail with reference to the appended schematic drawings, which shows exemplary variants of the disclosure, wherein:
Fig. 1 is a schematic perspective view of a road vehicle comprising a floor system for handling loads in a cargo space thereof;
Fig. 2 is a schematic side view of an exemplary load handling module of the system;
Fig. 3A is schematic side view of another exemplary load handling module of the system when in the first position;
Fig. 3B is schematic side view of the load handling module in Fig. 3A in the second position;
Fig. 4A is schematic side view of yet another exemplary load handling module of the system when in the first position;
Fig. 4B is schematic side view of the load handling module in Fig. 4A in the second position; and
Fig. 5 is a flow chart illustrating a method according to the second aspect of the present disclosure.

### Detailed description of embodiments

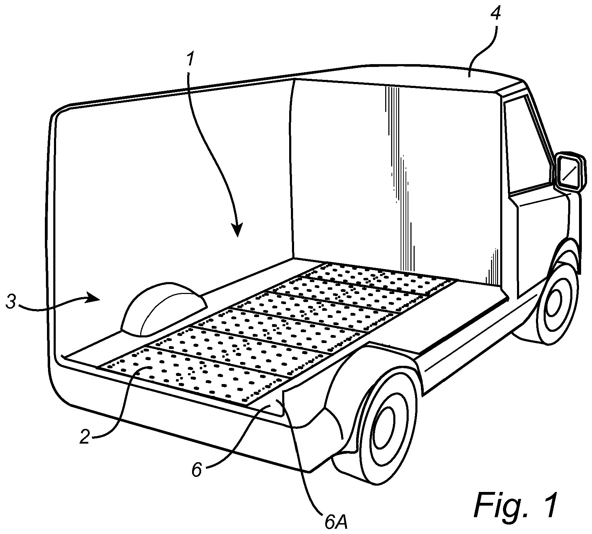

In Fig. 1, a system 1 for handling loads is shown. The floor system 1 comprises a plurality of load handling modules 2 arranged in the cargo space 3 of a road vehicle 4. Here, the plurality of load handling modules 1 are floor modules. However, it is to be understood that a load handling module 1 may also be a shelf module, that is a module 1 arranged in a shelving system configured to be arranged in the cargo space 3. A plurality of load handling modules 1 may comprise at least one floor module and at least one shelf module. Here, the road vehicle 4 is light truck, such as a service vehicle. However, it is to be understood that a road vehicle 4 may be any type of vehicle meant for use on roads, such as an automobile, a heavy truck, or a trailer configured to be attached to a truck.

The cargo space 3 of the road vehicle 4 is partially defined by an inner floor 6. The load handling modules 1 is arranged on the inner floor 6, i.e. on an inner floor surface 6A. The system 1 may comprise any number of modules 1, and the modules 1 may have any shape or dimension suitable for the cargo space 3.

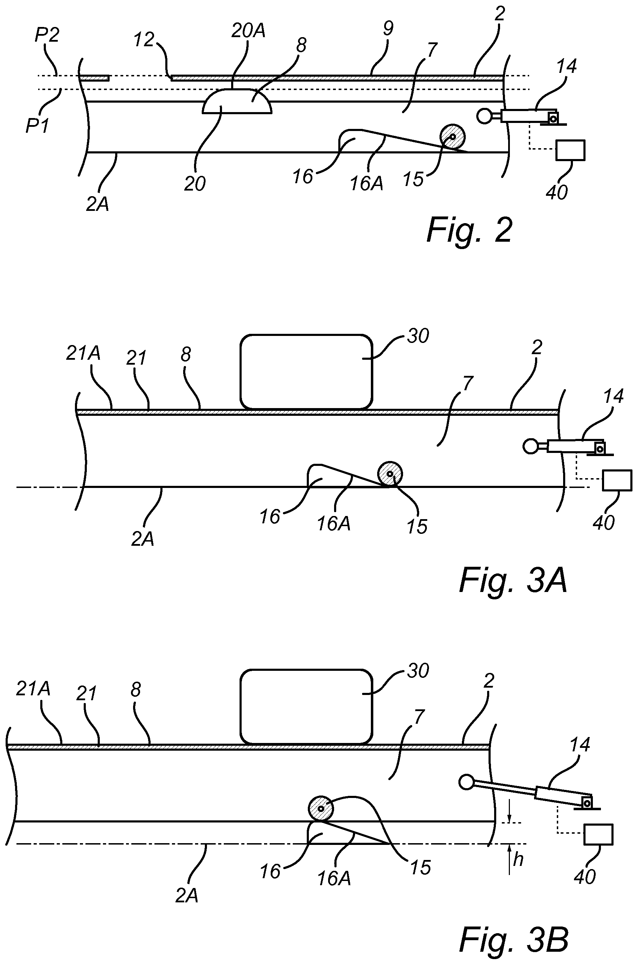

An exemplary load handling module 2 is illustrated in Fig. 2. The floor module 2 is shown from a side view. The floor module 2 comprises a beam 7 supporting a roll or ball transfer unit 20. As is known in the art, a *"roll transfer unit"* or a *"ball transfer unit"* is an element which comprises a rotatable body in the form of a roll or a ball and which is configured for facilitation of transportation of items. A roll transfer unit generally provides for transportation along one axis, whereas a ball transfer unit generally provides for omnidirectional transportation.

In the exemplary load module 2 in Fig. 2, the roll or ball transfer unit 20 is a load bearing element 8. Here, only one roll or ball transfer unit 20 is shown. However, a load handling module 2 may comprise a plurality of roll or ball transfer units 20. For example, a plurality of roll or ball transfer units 20 may be discretely arranged along a longitudinal axis of the beam 7. The roll or ball transfer unit comprises a rotatable body, wherein the rotatable body defines a load contact interface 20A. The load contact interface 20A is arranged in a first plane P1. Within the context of the present application, the term *"load contact interface"* is to be understood as a portion or point of the rotatable body which is, at any given instance, contacting a load or is intended to contact a load. In other words, since the rotatable body during facilitation of transportation of a load rotates, the portion which is in contact with the load changes. Consequently, a portion or point of the rotatably body which constitutes the load contact interface changes.

The load handling module 2 comprises a base portion 2A configured to rest on a surface of the road vehicle 4 and extending in a plane configured to be parallel with said surface. Such a surface may, e.g., be an inner floor surface 6A or a shelf surface of a shelving system.

The load handling module 2 further comprises a panel unit 9. The panel unit 9 may be a floor unit, if the module 2 is arranged on a floor, or a shelf unit, if the module 2 is arranged in a shelving system. Here, the panel unit 9 is extending parallel with the longitudinal axis of the beam 7. Further, the panel unit 9 forms a surface which faces the cargo space 3 when the module 2 is installed therein. The surface is extending in a second plane P2. As is seen in Fig. 2, the first plane is arranged below the second plane. This corresponds to a deactivated state of the load handling module 2, where a load 30 (shown inter alia in Fig. 3A) arranged thereon is supported by the floor unit 9. Hereby, the floor unit 9 may act as a friction surface for providing resistance to displacement of the load 30.

The beam 7 is movable relative the panel unit 9. Here, the beam 7 is configured to move while the panel unit 9 is stationary. However, it is to be understood that in other exemplar variants of the load handling module 10, the panel unit 9 may be movable while the beam 7 is stationary.

In Fig. 2, the beam 7 is in a first position. Here, it can be seen that the roll or ball transfer unit 20 is arranged beneath the panel unit 9. That is, the roll or ball transfer unit 20 will not engage and/or support a load arranged on the load module 2. The beam 7 is movable from the first position to a second position corresponding to an activated state of the load handling module 2. When bringing the beam 7 to the second position, the roll or ball transfer unit 20 traverses a through-hole 12 in the panel unit 9, such that the load contact interface 20A is arranged above the floor unit 9, that is, the first plane P1 is arranged above the second plane P2. The beam 7 is connected to an actuator arrangement 14. The actuator arrangement 14 may for example comprise a linear actuator, which is shown in Fig. 2. It is to be understood that the actuator arrangement 14 may comprise any number of actuators, and any type of actuators. The actuator arrangement 14 is communicatively connected to a detection and processing arrangement 40. Further, the detection and processing arrangement 40 may be configured to control the actuator arrangement 14.

The actuator arrangement 14 is operated at a voltage V and is operatively connected to the load handling module 2. The actuator arrangement 14 may, for example, be operated at any voltage in the interval of 20-40 V, such as 20 V, or 25 V, or 30 V, or 35 V, or 40V.

Here, the actuator arrangement 14 is connected to the beam 7. The actuator arrangement 14 is configured to apply a force on the beam 7 so as to move the beam 7 along a longitudinal axis of the beam 7. Hereby, a roller 15 connected to the beam 7 may engage with an elevation element 16. Here, the elevation element 16 is provided in the form of a ramp. Thus, the roller 15 may roll along an inclined surface 16A of the ramp 16 such that the beam 7 is simultaneously moved along and perpendicular to the longitudinal axis thereof. Hereby, the roll or ball transfer unit 20 may traverse the through-hole 12 such that the load contact interface 20A may be arranged above the panel unit 9. Thus, the load bearing element 20, i.e. the roll or ball transfer unit 20, is movable by means of the actuator arrangement a height h between a first position and a second position in a direction perpendicular to said plane of the base portion.

It is to be understood that lifting of the load bearing element 8 the height h can be achieved in a variety of ways. For example, the actuator arrangement 14 may be configured to lift the load bearing element 8 the height h in a direction perpendicular to the base portion 2A. That is, the actuator arrangement 14 may directly apply a force in such a perpendicular direction, instead of via the elevation element 16 and the roller 15. Here, the inclined surface 16A is linear. However, it may have a nonlinear shape.

The detection and processing arrangement 40 is configured to collect data indicative of current and time required by the actuator arrangement 14 for moving the load bearing element 8 from the first position to the second position, and based on the voltage V and the data, determine an energy consumed by the actuator arrangement 14 for moving the one or more load bearing element 8 from the first position to the second position. It is to be understood that the detection and processing arrangement 40 may collect data indicative of current and time in a variety of ways. To this end, the detection and processing arrangement 40 may comprise any detector, sensor, or means for measuring current. For example, the detection and processing arrangement 40 may comprise an ammeter, or a resistance meter, etc. Determining an energy consumed by the actuator arrangement 14 may therefore be performed in a variety of ways. For example, since the voltage V at which the actuator arrangement is operated is known, the energy consumed by the actuator arrangement 14 may be found using the current and time required for the movement.

The detection and processing arrangement 40 may further configured to compare the determined energy consumed by the actuator arrangement 40 with a reference value corresponding to an energy required by the actuator arrangement 40 to move the load bearing element 8 from the first position to the second position in an unloaded state, and based on the comparison of the determined energy consumed and the reference value, determine a presence of a load 30 on the load bearing element 8.

The detection and processing arrangement 40 may further be configured to: if a load 30 is determined to be present, estimate a mass of the load 30 based on the comparison of the determined energy consumed and the reference value and the height h.

It is to be understood that the beam 7 may be provided with a plurality of roll or ball transfer units 20, and as such, the panel unit 9 may be provided with a plurality of through-holes 12. Furthermore, the floor module 10 may comprise one or more covers, each cover being connected the beam 7 and configured to cover a respective through-hole 12 in the deactivated state of the floor module 10. Furthermore, each cover may be configured to allow a respective load contact interface 20A to traverse the through-hole 12 when the beam 7 is moving between the first position and the second position.

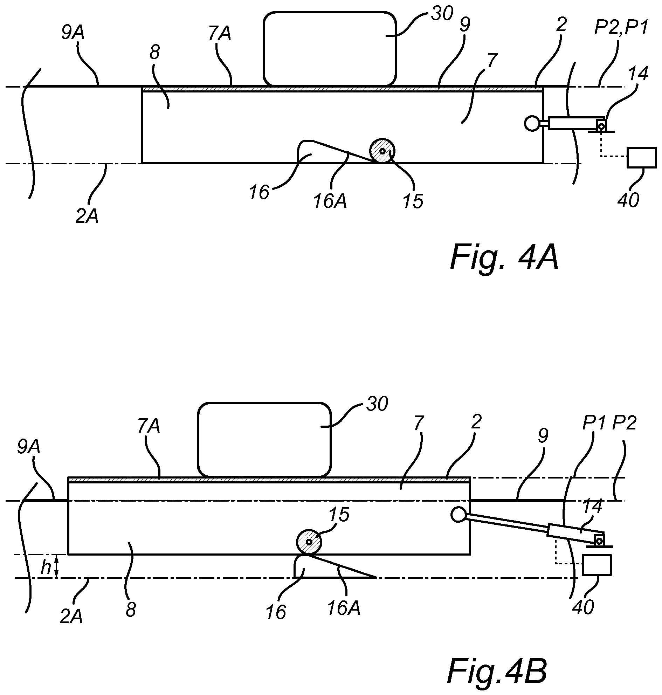

In Figs. 3A-B and 4A-B, other exemplary load handling modules 2 are shown. In these examples, the mechanism by which the respective load bearing element 8 is raised the height h is the same, and will for the sake of brevity not be repeated.

In Fig. 3A-B, an exemplary load handling module 2 is shown. In Fig. 3A, the load bearing element 8 is in the first position, whereas in Fig. 3B, the load bearing element 8 is in the second position. Here, the load bearing element 8 is a tile unit 21, wherein the tile unit 21 forms a surface 21A configured to support a load 30. The surface 21A of the tile unit 21 is extending in a plane substantially parallel with the plane in which the base portion 2A is extending.

In Fig. 4A-B, an exemplary load handling module 2 is shown. Here, the load bearing element 8 is a beam 7. The beam 7 has a longitudinal axis and comprises a load supporting surface 7A extending in the first plane P1. The load handling module 2 comprises a panel unit 9, the panel unit 9 extending parallel with the beam 7 and extending on both lateral sides of the beam 7. The panel unit 9 further forms a surface 9A intended to face the cargo space 3 of the road vehicle 4, the surface 9A extending in a second plane P2. In Fig. 4A, the first plane P1 and the second plane P2 are coinciding. The beam 7 is movable relative the panel unit 9 between the first position and the second position a height h. In Fig. 4B, the first plane P1 is arranged above the second plane P2. That is, the second plane P2 is arranged between the first plane P1 and the base portion 2A.

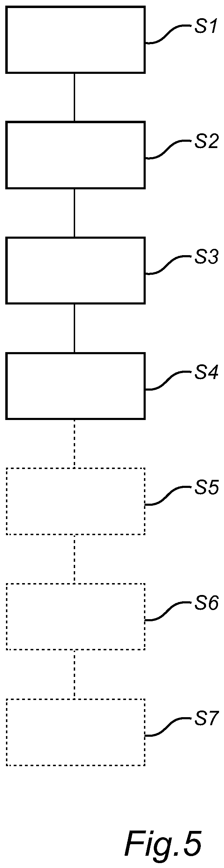

In Fig. 5, a flow chart illustrating a method for handling a load 30 in a cargo space 3 of a road vehicle 4 is provided. Providing S1 a load handling module 2 is performed. The load handling module 2 comprises: a base portion 2A configured to rest on a surface of the road vehicle 4 and extending in a plane configured to be parallel with the surface. The load handling module 2 further comprises one or more load bearing elements 8, each of the one or more load bearing elements 8 being movable by means of an actuator arrangement 14 a height h between a first position and a second position in a direction perpendicular to the plane of the base portion 2A.

Moving S2 the one or more load bearing elements 8 from the first position to the second position by the actuator arrangement 14 is performed. The actuator arrangement 14 is operated at a voltage V and is operatively connected to the at least one floor module 2.

Collecting S3 data indicative of current and time required by the actuator arrangement 14 for moving the one or more load bearing element 8 from the first position to the second position by a detection and processing arrangement 40 is performed. The detection and processing arrangement 40 is communicatively connected to the actuator arrangement 14.

Determining S4 an energy consumed by the actuator arrangement 14 for moving the one or more load bearing element from the first position to the second position by the detection and processing arrangement 40 is performed.

Comparing S5, by the detection and processing arrangement 40, the determined energy consumed by the actuator arrangement 14 with a reference value corresponding to an energy required by the actuator arrangement 14 to move the one or more load bearing elements 8 from the first position to the second position in an unloaded state may optionally be performed.

Determining S6, by the detection and processing arrangement 40, a presence of a load 30 on the one or more load bearing element 8 based on the comparison of the determined energy consumed and the reference value may optionally be performed.

Finally, if a load 30 is determined to be present: estimating S7 a mass of the load 30 based on the comparison of the determined energy consumed and the reference value and the height h by the detection and processing arrangement 40 may optionally be performed.

Additionally, variations to the disclosed variants can be understood and effected by the skilled person in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be

## Claims

1. A system for handling a load in a cargo space of a road vehicle, the system comprising:
at least one load handling module configured to be arranged in said cargo space of said road vehicle;
an actuator arrangement operated at a voltage V and operatively connected to the at least one load handling module; and
a detection and processing arrangement communicatively connected to the actuator arrangement;
wherein the at least one load handling module comprises:
a base portion configured to rest on a surface of the road vehicle and extending in a plane configured to be parallel with said surface; and
one or more load bearing elements, each of the one or more load bearing element being movable by means of the actuator arrangement a height h between a first position and a second position in a direction perpendicular to said plane of the base portion; and
wherein the detection and processing arrangement is configured to:
collect data indicative of current and time required by the actuator arrangement for moving the one or more load bearing element from the first position to the second position, and based on said voltage V and said data, determine an energy consumed by said actuator arrangement for moving the one or more load bearing element from the first position to the second position.

2. The system according to claim 1, wherein the detection and processing arrangement is further configured to compare the determined energy consumed by said actuator arrangement with a reference value corresponding to an energy required by the actuator arrangement to move the one or more load bearing element from the first position to the second position in an unloaded state, and based on the comparison of the determined energy consumed and the reference value, determine a presence of a load on said one or more load bearing element.

3. The system according to claim 2, wherein the detection and processing arrangement is further configured to: if a load is determined to be present, estimate a mass of the load based on the comparison of the determined energy consumed and the reference value and the height h.

4. The system according to any one of the preceding claims, wherein the one or more load bearing elements comprise a tile unit, wherein the tile unit forms a surface configured to support a load, the surface extending in a plane substantially parallel with the plane in which the base portion is extending.

5. The system according to any one of claims 1-4, wherein the one or more load bearing elements are arranged along a first plane, and wherein the at least one load handling module further comprises:
a panel unit, the panel unit extending parallel with the one or more load bearing elements and extending on both lateral sides of one load bearing element of the one or more load bearing elements, wherein the panel unit forms a surface intended to face said cargo space of the road vehicle, the surface extending in a second plane; and
wherein the one or more load bearing elements is movable relative the panel unit between the first position and the second position.

6. The system according to claim 5, wherein the one or more load bearing elements comprise at least one beam, the at least one beam having a longitudinal axis and comprising a load supporting surface extending in the first plane.

7. The system according to claim 5 or 6, wherein:
in the first position, the first plane is coinciding with the second plane; and
in the second position, the second plane is arranged between the first plane and the plane of extension of the base portion.

8. The system according to claim 5 or 6, wherein:
in the first position, the first plane is arranged between the second plane and the plane of extension of the base portion; and
in the second position, the second plane is arranged between the first plane and the plane of extension of the base portion.

9. The system according to any one of the preceding claims, wherein at least one load handling module is provided as a floor module configured to be arranged on an inner floor of the road vehicle, wherein the base portion is configured to rest on an inner floor surface.

10. The system according to any one of the preceding claims, wherein at least one load handling module is provided as a shelf module configured to be arranged in a shelving system of the road vehicle, wherein the base portion is configured to rest on a shelf surface.

11. Method for handling a load in a cargo space of a road vehicle, the method comprising:
providing a load handling module comprising:
a base portion configured to rest on a surface of the road vehicle and extending in a plane configured to be parallel with said surface; and
one or more load bearing elements, each of the one or more load bearing element being movable by means of an actuator arrangement a height h between a first position and a second position in a direction perpendicular to said plane of the base portion;
moving the one or more load bearing elements from the first position to the second position by the actuator arrangement, the actuator arrangement being operated at a voltage V and operatively connected to the at least one load handling module; and
collecting data indicative of current and time required by the actuator arrangement for moving the one or more load bearing element from the first position to the second position by a detection and processing arrangement, the detection and processing arrangement being communicatively connected to the actuator arrangement; and
determining an energy consumed by said actuator arrangement for moving the one or more load bearing element from the first position to the second position by the detection and processing arrangement.

12. The method according to claim 11, further comprising:
comparing, by the detection and processing arrangement, the determined energy consumed by said actuator arrangement with a reference value corresponding to an energy required by the actuator arrangement to move the one or more load bearing element from the first position to the second position in an unloaded state; and
determining, by the detection and processing arrangement, a presence of a load on said one or more load bearing element based on the comparison of the determined energy consumed and the reference value.

13. The method according to claim 12, further comprising:
if a load is determined to be present: estimating a mass of the load based on the comparison of the determined energy consumed and the reference value and the height h by the detection and processing arrangement.
